# EUROPEAN PATENT SPECIFICATION

(11) **EP 1 368 786 B1**
(45) Date of publication and mention of the grant of the patent: **25.01.2006**
(21) Application number: 02710220.1
(22) Date of filing: 28.01.2002
(51) Int. Cl.: G06T 1/20

(54) **SOFTWARE SYSTEM FOR DEPLOYING IMAGE PROCESSING FUNCTIONS ON A PROGRAMMABLE PLATFORM OF DISTRIBUTED PROCESSOR ENVIRONMENTS**
SOFTWARESYSTEM ZUM VERTEILEN VON BILDVERARBEITUNGSFUNKTIONEN AUF EINER PROGRAMMIERBAREN PLATTFORM MIT VERTEILTEN PROZESSORUMGEBUNGEN
SYSTEME LOGICIEL DESTINE A METTRE EN OEUVRE DES FONCTIONS DE TRAITEMENT D'IMAGES SUR UNE PLATEFORME PROGRAMMABLE D'ENVIRONNEMENTS DE PROCESSEURS REPARTIS

(30) Priority: 09.02.2001 EP 01400352
(43) Date of publication of application: 10.12.2003
(73) Proprietor: Koninklijke Philips Electronics N.V., 5621 BA Eindhoven (NL)
(72) Inventor: FLORENT, Raoul, NL-5656 AA Eindhoven (NL); MEQUIO, Claude, R., NL-5656 AA Eindhoven (NL)
(74) Representative: Charpail, François
(86) International application number: PCT/IB2002/000309
(87) International publication number: WO 2002/063559

(56) References cited:
- WO-A-99/38316
- US-A- 5 461 679
- US-A- 6 111 582
- MOORE M S ET AL: "Model-based programming for parallel image processing" PROCEEDINGS OF THE INTERNATIONAL CONFERENCE ON IMAGE PROCESSING (ICIP) AUSTIN, NOV. 13 - 16, 1994, LOS ALAMITOS, IEEE COMP. SOC. PRESS, US, vol. 3 CONF. 1, 13 November 1994 (1994-11-13), pages 811-815, XP010146352 ISBN: 0-8186-6952-7

## Description

The invention relates to a Software System, referred to as Image Transport Engine, for processing a sequence of images by deploying Image Processing Functions onto a multiprocessor system called Platform, said Platform generating input image data in order to provide processed output image data. Deployment is known as an operation of mapping components of software on components of hardware.

The invention finds a particular application in the field of Software Systems designed for processing sequences of medical X-ray images.

A software package that offers the ability to make several processes collaborate to the same image processing tasks, using multiprocessor-based signal processing systems forming a distributed programmable platform, is already known from the publication entitled "A new development Framework Based on Efficient Middleware for Real -Time Embedded Heterogeneous Multi-computers" by Randal JANKA in: "Proceedings of IEEE Conference and Workshop on Engineering of Computer-Based Systems, Nashville, TN, USA, 7-12 March 1999", p.261-268. According to the above-cited publication, signal processing applications are growing in complexity and now require "scalable heterogeneous multi-computers" to achieve satisfactory performance. Specific multiprocessor hardware targets are therefore increasing in computational throughput and inter-processor communication bandwidth to satisfy these requirements. A software that eases the difficulty of that development is known as a "Middleware", which sits in a layer above a standard operating system and below the application software, i. e. the Middleware is a general-purpose software that sits between a platform and the application. The platform is a set of processing elements defined by processor architectures and operating system application programming interfaces. The Middleware is defined by the application programming interfaces and protocols that it supports. It may have multiple implementations that conform to its interface and protocol specifications, depending on the number and type of the hardware targets it serves. A "Framework" is a software environment, which is designed to simplify application development and system management for a specialized application domain such as real-time signal processing, and which is defined by an application programming interface, a user interface, and Middlewares. A Middleware called TALARIS Middleware from "MERCURY Computer Systems" is considered in the cited publication. A Framework called "PeakWare for RACE" referred to as PW4R", is layered on top of TALARIS Middleware, which is designed to support the integration of graphical development tools to scalable heterogeneous systems. PW4R allows the developer to graphically specify the software and hardware of the application, then to map the software to the hardware. Thus, PW4R is a high-level means permitting the MERCURY Computer System of showing improved flexibility, i. e. of being easily up-graded, which was not the case of previous systems using low-level means. Many different algorithmic configurations might be needed in relation to such a Computer System. Also, algorithms that are complex might be combined or connected to other algorithms newly introduced over the platform. Moreover, the platform might receive new computer means or some computer means might be exchanged or eliminated. PW4R is a solution to this flexibility problem.

US 5461679 discloses a realtime MPEG codec for video data. Set up as a multiprocessor environment, the codec partitions the data into horizontal -- possibly overlapping -- stripes being assigned to different processors. Synchronisation is performed using a job stack for slave processors wherein the stack is filled by a master processor. The roles of master and one of the slave processors are swapped after processing each single frame.

In digital image processing, and in particular, in medical digital X-ray image sequence processing, processors are used in order to achieve algorithmic image treatments required during real-time functioning. Due to the computing power this entails, several processors distributed on a platform must collaborate to the same task. The known Framework PW4R is not a solution to the problems of processing sequences of medical digital X-ray images for reasons exposed below.

A first major problem regarding such an image processing system is related to latency, which is defined as the time necessary to produce a processed pixel with respect to the instant when the system starts to process this pixel. For instance, a medical system may be used to acquire a sequence of images and to produce processed images of said sequence during a cardiology operation comprising the introduction by a doctor of a catheter in a patient artery and the follow of the catheter progression in said artery on a screen. In this case, it is particularly important that the medical system deliver a close image-to-doctor feedback. When the doctor acts on the catheter, the result of his action must be perceived on the screen after a very small delay. An admissible delay is for example of 80 ms, which corresponds to 2 image frames in a sequence acquired at a rate of 25 images per second. To this end, the total computation latency of the image processing system must be reduced.

A second major problem regarding such an image processing is related to the amount of pixels to transfer in the admissible delay. This amount is of the order of mega-pixels to be processed per second, due to the real time functioning.

The PW4R associated to the Computer System disclosed in the above-cited publication does not propose solutions to these two major problems. Designing a system that solves these problems requires a precise specification of a computation model that fits the image processing application field. This computation model comprises the design of efficient mechanisms to achieve the above-described necessary performances.

Another problem lies in the use of memory means between the different processors distributed on the platform. If only one memory is shared by all the processors, this would result in contentions. Arbitrage means would be needed for controlling these contentions, resulting in latency. Another problem, specific of image processing, lies in the fact that either the image is processed pixel by pixel, which is not efficient, or image by image, which is efficient regarding transfer but is not efficient regarding latency. Another problem lies in the fact that many different algorithmic configurations might be needed. So, a method to automate the functioning of those various possible configurations is necessary.

The invention has for an object to provide a Software System, referred to as Image Transport Engine, for processing a sequence of images by deploying Image Processing Functions onto a multiprocessor system called Platform, said Platform generating input image data in order to provide processed output image data.

This problem is solved by an Image Transport Engine as claimed in Claim 1 and in the dependent Claims. This Image Transport Engine comprises a software data partitioning model, referred to as Communication Pattern, which partitions the images of the sequence using time-stamped data packets, the transfer of which may overlap the execution of said image processing functions.

The Image Transport Engine according to the invention presents several advantages: It is able to perform the deployment of said Image Processing Functions on the platform in a way that is automatic and flexible. It permits of minimizing latency. In particular, it is both efficient regarding transfer and latency. It permits of deploying several algorithms carrying out different Image Processing Functions. It is particularly appropriate to use for medical X-ray image sequence processing applications. In an embodiment, the invention proposes means that solves the problem of contentions.

The invention is described hereafter in details in reference to diagrammatic figures, wherein:
Fig .1A is a block diagram of a pipeline structure of the Communication Pattern;
Fig. 1B is a block diagram of a scatter/gather structure of the Communication Pattern;
Fig. 1C is a block diagram of a branch structure of the Communication Pattern;
Fig. 1D is a block diagram of a wide-band structure of the Communication Pattern;
Fig. 2 illustrates pipelining transmission without overlapping;
Fig. 3A illustrates pipelining transmission with overlapping;
Fig. 3B illustrates scattering transmission with overlapping;
Fig. 3C illustrates gathering transmission with overlapping;
Fig. 3D illustrates branch-connection transmission with overlapping;
Fig. 4 is a block diagram of a medical apparatus having processing means for using the Image Transport Engine.

The invention relates to a Software System referred to as Image Transport Engine based on a Software Component referred to as Communication Pattern, laying on top of a hardware programmable architecture called platform. The Image Transport Engine performs the deployment of one or several algorithmic chain(s) of Processing Functions on said platform. The platform includes a set of distributed processor environments, labeled CE, linked by paths. In an example of embodiment, said Image Transport Engine is described hereafter for the automatic implementation of digital X-ray Image Processing Functions, labeled IP, on the platform. Efficiency, up-gradability, flexibility, low latency and user friendliness are some of the characteristics of this Image Transport Engine.

This Image Transport Engine has constraints due to the application field which is the image post-processing for X-ray systems. For instance, as input data: the image size may be of the order of 1K x 1K x 16 bits pixels; the image rate of the order of 25 or 30 images per second. The scanning of the image is progressive, the data arriving as horizontal lines. The Image Transport Engine admits one live input only. The image size and image rate might change, but not in the course of an image sequence. For output data, the image size may be 1K x 1K x 16 bit pixels, to be displayed or stored. The display may be a medical monitor. Image storing on disk might be required at various levels of the processing chain. In the processing chain, several algorithms can be combined. It is an object of the proposed Image Transport Engine that the latency is less than one frame time-interval. It may be admitted more latency when algorithms require more. The images are formed in series and all images of a given sequence must be processed so as there is no image loss. This Image Transport Engine also has the ability to compare different algorithms. The parameters may change between images. The algorithms that are to be deployed on the platform may comprise: Noise reduction processes including temporal, spatial or spatio-temporal processing functions, Contrast Enhancement or Edge Enhancement at multi-resolution, Image subtraction, Zoom with Interpolation, Image rotation, Motion Estimation, Structure detection, Structure extraction, as known by those skilled in the art. This list, given as a matter of example, is not exhaustive. The algorithms may be non-linear, have different spatial breadths, i.e. neighborhoods, may be causal or anti-causal. The algorithm complexity may amount to about 100 operations per pixel.

This list demonstrates that implementing a multiprocessor application for X-ray image processing is very much constrained. Data-rate, latency, filter spatial breadth and algorithm diversity make the design of an efficient implementation very delicate. Flexibility and up-gradability are constraining factors because, on top of the performance issue, they add a strong requirement for simplicity: algorithm insertion, removal or swapping must be achieved through simple interventions. Also the Image Transport Engine should be manageable to non-specialists. It should not endanger the application integrity. The image size or image rate may be easily changed. A new, possibly more performing, processor may be added to the platform. Any modification in the application infrastructure may be manageable with easy intervention.

### I) Specification of the Communication Pattern

The Image Transport Engine is designed for answering all the above-cited requirements. Building an efficient communication infrastructure for a distributed processing application leads to the specification of a Communication Pattern. The overall functioning of said Image Transport Engine is automated via the mere specification of the Communication Pattern, so that all the data communications and processing controls are automatically realized. The Communication Pattern that is defined hereafter is able to handle distributed X-ray applications, and to provide a user with the means of devising a specific Communication Infrastructure adapted to a given application.

The definition of this Communication Pattern comprises phases of defining the target hardware including a number of processors their computing power and connectivity. The targeted hardware platform may be associated to a commercial operating system and a commercial host processor equipped with extra distributed programmable environments, referred to as Compute Environments, labeled CE, which can exchange data between each other. The Compute Environments are connected to each other by physical programmable data paths called BUS. Each CE contains a processor, its local memory and interfacing means capable of monitoring transfers over the BUS. Each CE is associated to a commercial real-time operating system, which contains basic facilities to manage data transfer and synchronization between CE. This commercial real-time operating system does not comply with the needs for flexibility and up-gradability previously defined.

It is the reason why, according to the invention, the Software Component called Image Transport Engine is yielded, in order to facilitate the design and coding of parallel applications to the point where only Image Processing Functions have to be coded and where the whole application infrastructure can be specified and generated from a textual or diagrammatic description. This Image Transport Engine has for ambition to produce efficient applications with respect both to latency and fluency. To this end, the Image Transport Engine is based on a Communication Pattern designed for the transfer of Image Data Packets. Latency refers to the average traversing time of a data element throughout the system from input to output. Fluency refers to the efficiency of data transmission, synchronization and scheduling. Synchronization of an image data packet is efficient when very short as compared to the image data packet transmission time. The transmission of an image data packet is efficient when fully taking profit from the bandwidth of the BUS over which this transmission occurs. And the scheduling of an image data packet transmission is efficient when unobtrusive with respect to local processing, i. e. temporal overlapping of data processing and communication.

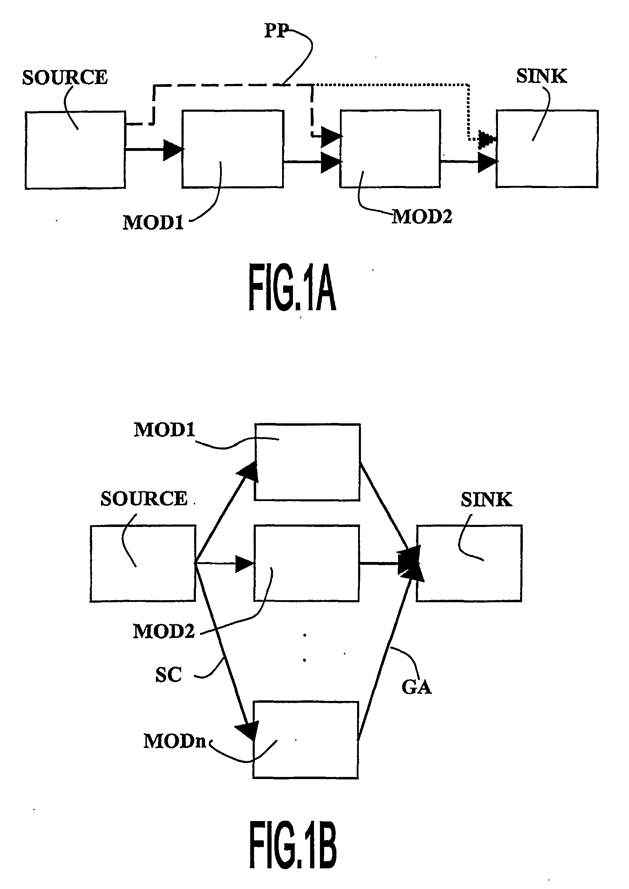

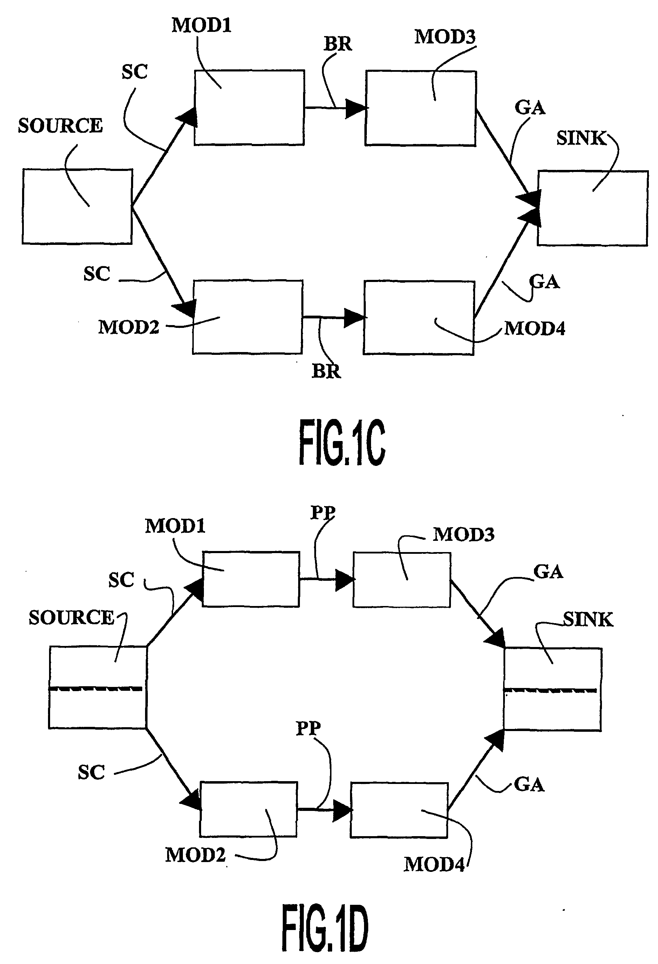

Referring to Fig. 1A to Fig. 1D, the Communication Pattern is a model enabling the definition of the image processing application. Said Communication Pattern is an oriented software model able to achieve the automation and optimization of data communication and computation over a set of Image Processing Functions IP participating to said image processing application. Said Communication Pattern handles elementary image data packets, which are processed by Software Modules and passed from Module to Module in a regular way. The whole process can be seen as a flow of successive image data packets pushing each other in the model where they cross the computing units called Modules, which repeatedly process them one after the other. However, before reaching fluid data flowing the system must start from a frozen state, where every Module is blocked on an initializing condition and manage to get going pacefully, that is avoiding dead lock and incorrect synchronization. The Communication Pattern is formed of several software components arranged according to a Data Communication Design comprising Nodes, Interfaces and Edges.

The Nodes are the Software Modules, referred to as Modules for simplicity, featured by boxes. The Modules are execution units. The role of a Module is to activate the image processing function labeled IP attached to it and to manage the corresponding data transfers and synchronization. Only one Image Processing Function IP is attached to a given Module. This function IP may in turn call several other functions. The Image Processing functions IP are defined within the boundary of the process and usually at an image data packet level, in order to insure a low latency. So, an image processing Application is defined as a set of Modules exchanging data, parameter or synchronization information. The Communication Pattern does not exclude multi-processing, i. e. several Modules belonging to the same image processing Application running on the same Processor, nor concurrent image processing Applications, i. e. several distinct image processing Applications sharing the same processors.

The Edges are links that are featured by arrows, and that are called Connections. The Communication Pattern defines the logical connectivity associated to the Modules of a given application. Thus, the Communication Pattern is oriented so that over a link data flows in one direction only and in a-cyclic manner: loops are not permitted and there is no data link oriented upstream. The arrows representing the Connections are oriented accordingly.

The Interfaces between Modules and Connections are the Ports. The Modules have a specific internal structure, which allows them to exchange information. The only way of exchanging information with a Module is through Ports. The Connection orientations indicated by the arrows define Input Ports and Output Ports. When these Modules have to communicate with entities external to the Communication Pattern, these entities are referred to as Terminal Ports. The Connections define the mechanism responsible for the information exchange between Module Ports. Logical connections can only be successful if they are associated to physical paths, i. e. physical connections.

Three types of Connection classes are defined: A first type is the Data Connection class, wherein Connections deal with image data. The Data Connections are specialized in the transfer of image data packets and are one-way. A second type is the class of Terminal Connections, which comprises Half-Connections linking Module Ports to Terminal Ports and are one-way. A third type is the class of Parameter Connections, which handle algorithm parameters and are bi-directional.

Each Data Connection bears a parameter indicating the type of the data to be transferred that is statically defined. In fact, the number of bytes per pixel suffices as far as data transferring is concerned. The Communication Pattern does not allow type conversion at data transfer time. If such conversions are necessary, they have to be implemented within the Image Processing IP functions. So, all the Input and Output Ports corresponding to a given Connection deals with the same data type, thus justifying a unique parameter per Connection. As far as data transfer is concerned, any number of bytes per pixel is acceptable. However, since the data type is also meaningful at the Image Processing IP function level, the possible values of 1, 2, 4 or 8 bytes per pixel are specified.

The Modules comprise several types among which: a Source Module, labeled SOURCE, which does not feature any input data Connection and which is responsible to generate the data to be processed, together with synchronization information; a Sink Module, labeled SINK, which does not feature any output data Connection and is used as processed data receptor; and ordinary Modules, labeled MOD, which are neither Source nor Sink Modules. The Source and Sink Modules are by nature often equipped with input and output Terminal Connections. There is only one Source Module per Communication Pattern. Instead, there may be several Sink Modules. It is to be noted that terminal output connections do not necessarily emerge from a Sink Module. Terminal Connections may be used in several places of the Communication Pattern so as for example to save data on a given medium.

The SOURCE Module may feature several Output Data Connections, providing they deliver synchronous data streams. The Source Module is also responsible for producing a time reference data structure labeled Time-Ref which locates every image data packet of a given image sequence. In fact, this reference contains a field that identifies an image index within the sequence of images, and a field bearing the packet index within the current image. Time-Ref will be passed, along with the corresponding packet, from Module to Module. It permits of performing several important tasks, which are data locating, management of the Image Processing Function IP and delay management. Time-Ref is by definition a time reference structure that locates data packets with respect to the image index in the sequence and with respect to the data packet position within the current image. Thus, it is not a data packet reference in that several distinct data packets may be transferred along with Time-Ref structures containing the same information. In particular that is the case when a given input data packet produces several output data packets.

With the elements introduced so far, it is already possible to create very sophisticated valid Communication Models. Connectivity rules are presented hereafter: each module is equipped with a unique parameter connection; each communication pattern must contain a least a Source and a Sink Modules; the Source Module is unique; several Sink Modules may coexist; the Source may feature several data output ports corresponding to synchronous streams; the Sink may feature several data input ports; an Ordinary Module may feature more than one input and/or output ports; a data output port may be read by several simple Data Connections; a data input port cannot be written into by several simple Data Connections;.Data Connections may bypass pipeline levels; Data connection loops ("no-loop" rule) are not permitted; several connections can only be gathered if they are issued from common scattering and if they feature the same strip transfer frequency; partial gathering is possible if it respects the last two rules. Most of the rules listed above are natural or permissive. However, the "no-loop" rule seems to unbearably discard the possibility of implementing temporal recursive algorithms. It is indeed an incorrect assertion. Temporal recursive filters need previous output data as input. But there is no need to recover previous output data from an external path, when those data were produced internally. It suffices to provide the developer with a way of memorizing data between consecutive images to overcome the difficulty. Thus, removing data connection loops from the Communication Pattern specifications avoids terrible implementation and theoretical problems. Likewise, it is not to be concluded that any feedback is impossible at the inter-module level. The "no-loop" condition only applies to Data Connections, but Parameter Connections can perfectly be used to introduce limited feedbacks, for instance, involving control information.

### II) Mapping the Communication Pattern over the Platform.

The Communication Pattern is mapped over the Platform. The mapping operation defines the association between Modules and Compute Environments and yields an implementation of the way the image processing functions IP interacts with the data transiting over the processor network. This operation comprises phases of partitioning the Input Data into Data Packets and transmitting said image Data Packets.

According to the invention, the Input Data are Partitioned into data packets, which are data slices called Image Strips, by the Source Module. An Image Strip is a packet of consecutive image lines, possibly overlapping with other Image Strips. In the following example of X-ray Medical Image Processing, an image of a sequence is scanned horizontally and the data arrive along horizontal lines formed of pixels that have to be processed. The image is not processed pixel by pixel, which is not efficient, nor the sequence is processed image by image, which is efficient regarding transfer but is not efficient regarding latency. Instead, the image is divided into Image Strips of several lines corresponding to the image data packets above-described. The Image Strips are parallel to the image lines. The Image Strips are transferred for image processing. In fact, each Module introduces a latency that is proportional to the amount of data to process. It has been found, according to the invention, that the use of Image Strips is efficient both in high transfer and in weak latency. The choice of the number of lines for forming one Image Strip determines a compromise between the transfer efficiency and the latency. Image Strips keep latency to a minimum. Thus, all that have been previously described related to Data Packets is to be considered to be applied to Image Strips. In an example of embodiment, an image formed of 1024 lines comprises 32 Image Strips of 32 lines.

Since most X-ray imaging algorithms introduce 2-D neighborhoods, spatial overlapping must be taken into account. Overlapping Areas are needed at the Input Port level. The IP function is provided with regions containing both the active area formed of the pixels to be processed and the Overlapping Area formed of extra pixels needed to achieve processing within the active area. Since the input regions seen by the IP function should naturally coincide, overlapping parameter is declared at the Module level. This means that algorithms combining several entries that require different spatial breadths are in fact provided with regions featuring unique overlapping. Also, symmetrical overlapping geometry is considered. Since only horizontal Image Strips are regarded, the overlapping effect can be taken into account by a sole Module level Parameter relating to the number of overlapping lines on either sides of the Image Strip. It is to be noticed that spatial overlapping introduces extra strip delays at each Module crossing. It is to be noted that spatial overlapping should not be confused with Temporal overlapping, which refers to the ability of making data transfer overlap data processing.

For launching a user-defined Image Processing Function IP on the current Image Strip, optimization is realized by achieving temporal inter/intra-module input/output computing overlapping over several pre-defined connection means types. Connection means types hereafter called Pipeline, Scatter/Gather, Branch-Connections are defined. Among the Connections above-cited, Data Connections is the most important class. All the Connections belonging to the class of Data Connections ensure the repeated transfers of successive Image Strips together with the necessary synchronization information, including Time-Ref. They are all mono-directional. Referring to Fig. 1A to Fig. 1D, Data Connections comprise:

Simple Connection labeled PP that is a point to point Connection, which can transfer consecutive Image Strips (Fig. 1A).

[1/n]-Scatter Connection labeled SC that is a point to point Connection belonging to a group of n Connections all issued from a common Output Port, which can transfer Image Strips one after the other at the rate of one Image Strip every n Image Strips. The corresponding Emission Port is called Data Scattering Port (Fig. 1B).

[1/n]-Gather Connection labeled GA that is a point to point Connection belonging to a group of n connections all reaching a common Input Port, which can transfer Image Strips one after the other at the rate of one Image Strip every n Image Strips and gather all the Image Strips reaching this Output Port. The corresponding reception Port is called Data Gathering Port (Fig. 1B).

Branch-Connection (Fig. 1C) labeled BR that is a point to point Connection similar to a simple Connection, but linking two Modules belonging to the same branch of a Scatter-Gather Structure.

Examples of Communication Patterns using said Image Strips with minimum latency are described hereafter. They rely on methods of Task Partitioning and methods of Data Partitioning.

Referring to Fig. 1A, a Pipeline Structure comprises a Source Module SOURCE, one or several ordinary module(s), for example MOD1, MOD2 and a Sink Module SINK. The Simple Connections PP are adapted to the implementation of said Pipeline Structure, which can perform algorithm serial combination. The Image Processing Functions are applied one after the other along the physical data path linking the involved Modules, forming said Task Partitioning Structure. Each Module activates a given task for all the Image Strips, and several intermediate results can be passed to the next Module as parallel data streams. Fig. 1A represents a pure Task Partitioning Structure. A Short-cut between the Source and the Sink Modules, or between the Source and an Ordinary Module, is permitted as illustrated by the connection represented by a dotted line. The latency introduced by Task Partitioning by Pipelining increases with the number of pipeline levels. In fact, several Image Strip time-periods are lost each time one goes through a pipeline stage, but in practice, Task Partitioning by Pipelining is very efficient.

Referring to Fig. 1B, a Scatter/Gather Structure comprises one Source Module SOURCE, at least two Ordinary Modules disposed in parallel in branches such as MOD1, MOD2,...MODn, and a Sink Module SINK. The Scatter Connections SC and the Gather Connections GA are specialized in Scatter/Gather type of Task Partitioning. For instance, the Image delivered by the Port of the Source Module is sliced into Image Strips that are numbered according to an index. A [1/n]-Scatter Connection distributes evenly the Image Strips on the Modules MOD1 to MODn, according to their Strip-Index. Once processed, the scattered Image Strips are automatically put together again thanks to a [1/n]-Gather Connection. Instead of n branches, only two branches could be used to form a Scatter/Gather Structure. In this case, the Image Strips having the odd index are processed on one branch and the Image Strips having the even index are processed on the other branch. Fig. 1B represents a pure Data Partitioning Method. A Short-cut between the Source and the Sink Modules is permitted. The Scatter/Gather operation allows to get the advantages of Data Partitioning while keeping a low latency. However, it might entail critical difficulties when applied to algorithms featuring wide spatial breadth since, by nature, each branch of the scattering structure processes non-contiguous Image Strips. It is mostly advantageous if the required spatial overlaps are limited.

Referring to Fig. 1C, a Branch Mode Structure comprises a Scatter /Gather Structure having Pipeline Structures in the branches. The Scatter/Gather Structure comprises one Source Module SOURCE, at least two parallel branches comprising Pipeline Structures of Ordinary Modules, and a Sink Module SINK. For instance, the Image delivered by the Port of the Source Module is sliced in n=2 Image Strips. The Image Strips are numbered according to an index, in this example, the indices may 1, 2. A [1/2]-Scatter Connection SC distributes the Image Strips on MOD1, MOD2, of the first branch BR, following the parity of their Strip-Index. The Image Strips are alternately processed by the Modules MOD3, MOD4 of the second branch BR. Once processed, the scattered Image Strips are automatically put together again thanks to a [1/2]-Gather Connection GA. A Short-cut as previously described is permitted.

Referring to Fig. 1D, further structures, called Wide-Band data Partitioning Structures, may be designed as composition of the preceding Structures, using simple connections PP. The Wide-Band data Partitioning Structures use a characteristic of the Source Module, namely its ability to convey two synchronous output streams. If, within the Module SOURCE, a delay of half an image is introduced, plus a possible provision for spatially overlapping Image Strips, then it becomes feasible to produce two synchronous streams as if they were emanating from two distinct half-size images. The downstream Modules process these streams independently down to the Module SINK that will feature two distinct Input Ports, one for the upper part and one for the lower part of the Image. There remains now to gather the two half images within the Sink Image Processing function and push the final result towards the targeted Terminal Point. More generally speaking, this arrangement can be applied to n consecutive, possibly overlapping, Image Wide-Bands, which are made out of several consecutive Image Strips. The above-described Task Partitioning by Pipelining can be seamlessly combined with Wide-Band Data Partitioning as illustrated by Fig. 1D.

Wide-Band Data partitioning has advantage over Task Partitioning by Pipelining, since it reduces the required number of bandwidths and allows high modularity, so that tasks do not have to undergo unnatural slicing in order to reach real-time conditions through pipelining. However, Wide-Band Data Partitioning introduces higher latencies. Task Partitioning by Pipelining remains more efficient than Wide-Band Data Partitioning.

### III) Defining the Transmission of the Image Strips

Time-Ref locates Image Strips with respect to the current Image Index in the sequence and with respect to the Image Strip position within the current image. As above-described, several distinct Image Strips may be transferred along with Time-Ref structures containing the same information, such as when a given input Image Strip produces several output Image Strips. Said image strips are transmitted one after the other over the Connections. So, all the data communication and computation occur at the Strip level, which permits of keeping latency very small. Each Module repeatedly receives, processes and transmits the Image Strips. Time-stamped image strips are used in such a way that inter-module and intra-module temporal overlapping is performed between image strip transmission and that computing is constantly achieved: so, the overall functioning is extremely optimized. For each Connection means type, the precise way those overlapping properties are achieved will be explained in details. It relies on a proper input/output image strip delay policy.

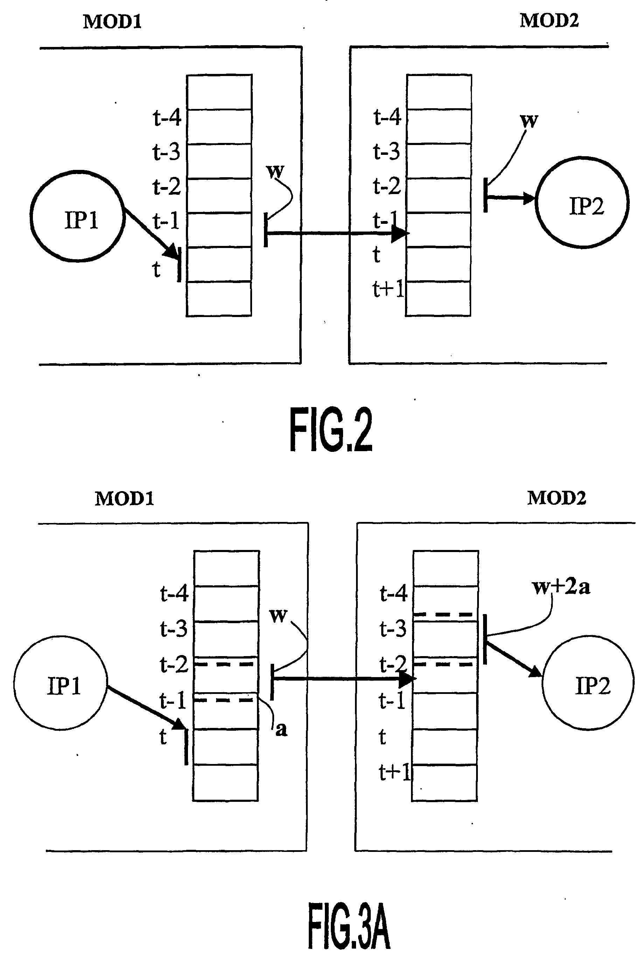

Fig. 2 illustrates the transmission of the Image Strips in the Pipeline Structure of Fig. 1A according to a technique called Pipelining without Overlap. The SOURCE is defined to produce a predetermined number of adjacent Image Strips (with active areas, without overlapping areas). The image strips have a given number of lines, called width w. These Image Strips, produced by the SOURCE, are transmitted to MOD1, one after the other, and from MOD1 to MOD2. For instance, MOD1 applies on each Image Strip a first image processing function IP1, and MOD2 further applies on the transmitted Image Strips a second image processing function IP2. The references t-4, t-3, t-2, t-1, t, are the instants when the successive Image Strips are processed in MOD1. While the first image processing function IP1 is producing an Image Strip at the instant t, denoted by [t]-Image Strip, the Image Strip produced at the previous instant t-1, denoted by [t-1]-Image Strip, is already available to be transmitted to MOD2. And the preceding Image Strip that has been produced at the instant t-2, denoted by [t-2]-Image Strip, is already available in MOD2 to be processed by the IP2 image processing function. Thus, in a Pipeline Structure, during the production of a given [t]-Image Strip by a first Module at the instant t, the first Module Output Port transmits the last in time [t-1]-Image Strip. And, during the processing of a certain [t-2]-Image Strip by a second Module, said second Module Input Port receives the next in time [t-1]-Image Strip. So, each Module is constantly working.

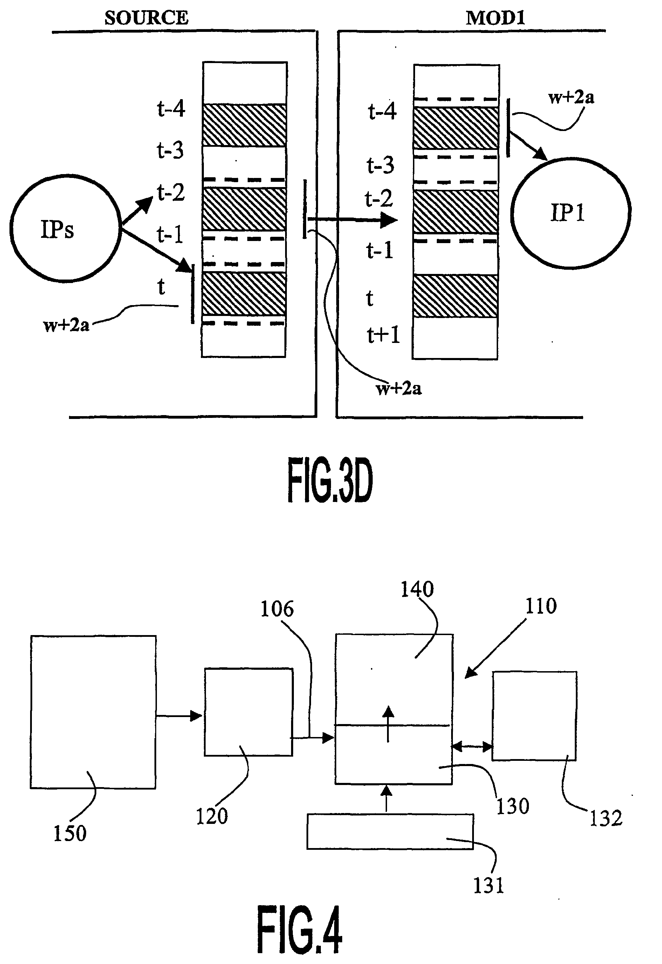

Fig. 3A illustrates the transmission of Image Strips in the Pipeline Structure of Fig. 1A according to a technique called Pipelining with Overlap. The SOURCE is defined to produce a predetermined number of adjacent Image Strips (with active areas, without overlapping areas). The image strips have a given number of lines, called width w. In an example, these Image Strips, produced by a SOURCE are transmitted to the first Module MOD1, one after the other, to be processed by a first processing function IP1. Then they are transmitted in the same order to the second module MOD2, in order to be processed by a second processing function IP2 that needs a neighborhood of the pixels for processing them. Thus, two overlapping areas of predetermined width a, located each side of the active area, are needed in MOD2 for carrying out said second image processing function IP2. The references t-4, t-3, t-2, t-1, t, are the successive instants when the adjacent Image Strips of width w are produced by the first Module MOD1.

While the image processing function IP1 produces a [t]-Image Strip at the instant t in MOD1, it has already produced the [t-1]-Image Strip. The next Module MOD2 needs an active area plus two overlapping areas. Thus, the [t-1]-Image Strip cannot be transmitted because the overlapping area located in the [t]-Image Strip is not ready. However, the [t-2]-Image Strip produced at t-2 is already available. So, at the instant t, the Output Port of MOD1 sends the [t-2]-Image Strip plus the overlapping area that is located in the [t-1]-Image Strip. However, it needs to send neither the overlapping area located in the [t-3]-Image Strip nor an area of width a, located in the [t-2]-Image Strip adjacent to the [t-3]-Image Strip, because these areas are already available in the second Module MOD2. During the production of the [t]-Image Strip, the Image Strip that is transmitted to the second Module MOD2 has the particularity to have a width w and to be shifted of the width a with respect to the [t-2]-Image Strip toward the [t-1]-Image Strip. During that transmitting operation, the Module MOD2 processes the [t-3] Image Strip with its two overlapping areas (one overlapping area located each side), which are already available in MOD2. So, in the mechanism of Task Partitioning by Pipelining with Overlap, an extra-delay is needed between the production of a given Image Strip and the transmission of a previously produced Image Strip. This extra-delay is related to the production of the necessary overlapping area that is located in the last in time Image Strip. Using such extra-delay and spatial shift yields an optimal scheme of Image Strips transmission.

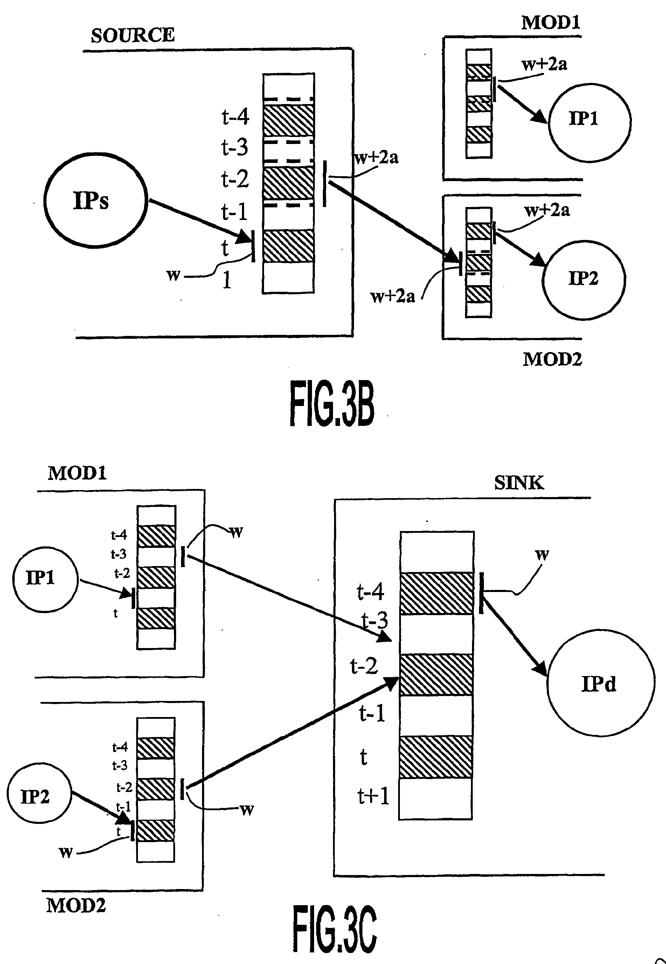

Fig. 3B illustrates the transmission of Image Strips in the Scattering Structure of Fig. 1B according to a technique called Scattering with Overlap. The SOURCE is defined to produce a predetermined number of adjacent Image Strips having a given number of lines, called width w. In the example illustrated by Fig. 3B, one Image Strip out of two is transmitted to the first Module MOD1. Said Image Strips are transmitted one after the other in order to be processed by a first processing function IP1. The Image Strips that are not transmitted to the first Module MOD1 are transmitted to the second module MOD2 disposed in parallel, in order to be processed by a second processing function IP2. Thus, Modules MOD1 and MOD2 process alternate Image Strips. That may be the case when the number of Modules of Fig. 1B is n=2. Between the Image Strips processed by MOD1, there is a void of lines, and between the Image Strips processed by MOD2, there is a void of lines. For instance, MOD1 processes the Image Strips represented by white bands and MOD2 processes the Image Strips represented by hatched bands. For instance, MOD1 processes the Image Strips with odd indices, and MOD2 processes the Image Strips with even indices. The Image processing functions of MOD1 and MOD2 are assumed to need a neighborhood of the pixels for processing them. Thus, two overlapping areas of predetermined width a, located each side of the active area, are needed in order to carry out said image processing functions IP1, IP2. The references t-4, t-3, t-2, t-1, t, are the successive instants when the Image Strips of width w are produced by the SOURCE. While the SOURCE is producing a [t]-Image Strip with an even index at the instant t, it has already produced the previous Image Strips at t-4, t-3, t-2, t-1,.... The next Module MOD2 needs an active area having an even index plus two overlapping areas that are located each side in the Image Strips having odd indices. Thus, the [t-2]-Image Strip produced at t-2 in the SOURCE, which has an even index and which is already available, is transmitted to MOD2 together with two overlapping areas of width a located in the already produced [t-3]- and [t-1]-Image Strips of odd index . So, at the instant t, the Output Port of SOURCE sends the [t-2]-Image Strip plus said overlapping areas located at its sides. During that transmitting operation, the Module MOD2 processes the [t-4] Image Strip, which has an even index, and its two overlapping areas coming respectively from the odd index [t-5]-Image Strip and the odd index [t-3]-Image Strip (one overlapping area located each side), which are already available in MOD2. During the transmission of the even index [t-2]-Image Strip, the SOURCE Output Port cannot transmit the odd index [t-1]-Image Strip to MOD1 because the overlapping area located in the [t]-Image Strip is not yet ready. So, MOD1 processes the odd index [t-3]-Image Strip that has been transmitted before the transmission of the even index [t-2]-Image Strip. It has to be noted that the overlapping areas are to be transmitted together with the active area because they are located in Image Strips of indices that are not otherwise processed by the Modules MOD1 or MOD2. For instance, MOD2 has no lines of the odd indices Image Strips save the lines of the overlapping areas. MOD1 has no lines of the even indices Image Strips save the lines of the overlapping areas. As above-explained, there are voids between the Image Strips in MOD1, MOD2.

Fig. 3C illustrates the transmission of Image Strips in the Gathering Structure of Fig. 1B according to a technique called Gathering with Overlap. The SINK is defined to construct a final image from the gathering of a predetermined number of adjacent Image Strips, for instance, the Image Strips processed according to the Scattering with Overlap previously described. The Image Strips have a given number of lines, called width w. In the example illustrated by Fig. 3C, these Image Strips are gathered by the Input Port of the SINK. The SINK does not need the Overlapping areas processed by IP1 and IP2. The SINK only needs the adjacent active areas for constructing the final Image. So, the Image Strips without their overlapping areas are alternately sent by MOD1 and MOD2 in the order of the successive instants t-4, t-3, t-2, t-1, t. So, MOD1 sends the odd index [t-5]-Image Strip, then MOD2 sends the even index [t-4]-Image Strip, then MOD1 sends the odd index [t-3]-Image Strip, then MOD2 sends the even index [t-2]-Image Strip, then MOD1 sends the odd index [t-1]-Image Strip, then MOD2 sends the even index [t]-Image Strip. And SINK constructs the final Image with only the active areas, since, when SINK receive the lines of the [t]-Image Strip, for instance, it already disposes of the lines of the adjacent [t-1]-Image Strip, etc.

Fig. 3D illustrates the transmission of Image Strips in the Branch-Structure of Fig. 1C according to a technique called Branch-Connection with Overlap. Regarding the branch formed of Modules MOD1 and MOD3, while the SOURCE is producing a [t]-Image Strip with an even index at the instant t, it has already produced the previous Image Strips at t-4, t-3, t-2, t-1,.... It is assumed that the next Module MOD1 needs an active area having an even index plus two overlapping areas that are located each side in the Image Strips having odd indices. Thus, the [t-2]-Image Strip produced at t-2 in the SOURCE, which has an even index and which is already available, is transmitted to MOD1 together with two overlapping areas of width a located in the already produced [t-3]- and [t-1]-Image Strips of odd index. So, at the instant t, the Output Port of SOURCE sends the [t-2]-Image Strip plus said overlapping areas located at its sides. During that transmitting operation, the Module MOD1 processes the [t-4] Image Strip, which has an even index, and its two overlapping areas coming respectively from the odd index [t-5]-Image Strip and the odd index [t-3]-Image Strip (one overlapping area located each side), which are already available in MOD2. During the transmission of the even index [t-2]-Image Strip, the SOURCE Output Port cannot transmit the odd index [t-1]-Image Strip to MOD1 because the overlapping area located in the [t]-Image Strip is not yet ready. So, MOD1 processes the odd index [t-3]-Image Strip that has been transmitted before the transmission of the even index [t-2]-Image Strip. It has to be noted that the overlapping areas are to be transmitted together with the active area because they are located in Image Strips of indices that are not otherwise processed by the Modules MOD1 or MOD2. Now, assuming that the next module MOD3 of the branch also needs overlapping areas, then the overlapping areas must be cumulated along the branch in order to be used in the chain of Modules within the branch.

In the Wide-Band Structure of Fig. 1D, the Image Strips are transmitted according to a technique called Wide-Band with Overlap. The SOURCE is defined to produce two Image Halves, each Image Half being formed of Image Strips. The first Image Half is transmitted to the first branch comprising Modules MOD1 and MOD3. The second Image Half is transmitted to the second branch comprising the Modules MOD2 and MOD4 disposed in parallel. In each branch, the Images Strips are processed like in Pipelining Structures. The transmission is performed either according to the Pipelining technique illustrated by Fig. 2 or, when neighborhoods are needed, according to the Pipelining with Overlapping technique illustrated by Fig. 3A.

In all the transmission techniques including overlaps, the delay for producing the Image Strips, the delays for emitting the Image Strips and the delays for processing the received Image Strips are different. So, the techniques comprise steps of adjusting the difference between the instant of production of the Image Strips by a Module and the instant of emission of the Image Strips by said Module. The techniques also comprise steps of adjusting the difference between the instant of reception of the Image Strips by a Module and the instant of processing of the Image Strips by said Module. These technique further comprises steps of fine adjustment related to the Overlapping areas.

### IV) Running the Image Transport Engine

This Image Transport Engine governs the exact behavior of the system at run time. The Image Transport Engine manages the input and output data transfers linking the software Modules to the external world, it manages parameters reading, IP function calling and data locating. This last functionality corresponds to the necessity to locate image strips with respect to space and time so as for instance to provide the necessary information for the registering of delay data streams. The Image Transport Engine also conditions the possible temporal and / or spatial image strip overlapping, the possible data scattering or gathering operations.

### V) Apparatus having computing means for using the Software System and program product to form the Software System

Referring to Fig. 4, a medical examination apparatus 150 comprises means for acquiring digital image data of a sequence of images, and a digital processing system 120 for processing these data using the Software System described above. The medical examination apparatus comprises means for providing image data to the processing system 120 which has at least one output 106 to provide image data to display and/or storage means 130, 140. The display and storage means may respectively be the screen 140 and the memory of a workstation 110. Said storage means may be alternately external storage means. This image processing system 120 may be a suitably programmed computer of the workstation 130, or a special purpose processor. The workstation 130 may also comprise a keyboard 131 and a mouse 132.

## Claims

1. Software system, for processing a sequence of images by deploying image processing functions onto a multiprocessor system called platform, said platform generating input image data representative of the image sequence and further provides processed output image data from the generated input image data, said software system comprising:
a software data partitioning model, referred to as communication pattern, which partitions the images of the sequence using time-stamped data packets, the transfer of which may overlap the execution of said image processing functions.

2. The software system of Claim 1, wherein the communication pattern includes software modules (MOD1, MOD2) linked by oriented connections (PP) through ports; and each module activates one image processing function attached to it and manages data transfers and synchronization.

3. The software system of Claim 2, wherein:
a module exchanges information with another module through ports;
one source module (SOURCE) responsible to generate the time-stamped data packets and a time reference data structure, which locates every image data packet of a given image sequence;
one or several sink modules (SINK) used as output data receptors; and
ordinary modules connected between the source module and the sink modules in such a manner that the image data flows in one direction only and in an a-cyclic manner;
and wherein the source module has no input port and the sink modules have no output ports; the ordinary modules have input and output ports.

4. The software system of Claim 3, wherein, among the connections, there are data connections dealing with data and specialized in the transfer of image data packets, which are oneway connections.

5. The software system of Claim 4, wherein the time reference data structure locates data packets with respect to an image index in the image sequence and with respect to a data packet position within the current image.

6. The software system of Claim 5, wherein the source module partitions the input data into including image strips, an image strip being a packet of consecutive image lines and data arriving along said lines formed of pixels that have to be processed.

7. The software system of Claim 6, comprising the definition of overlapping areas for the processing of pixels of specific image strips and the overlapping areas include extra parts of image strips located on either sides of said area of the specific image strips.

8. The software system of Claim 7 for programming a distributed application comprising steps of transmitting image strips with overlapping areas between emitting modules and receiving modules, wherein steps are present of adjusting the difference between the instant of production of image strips by a module and the instant of emission of the image strips by said module, and steps of adjusting the difference between the instant of reception of image strips by a module and the instant of processing of the image strips by said module for performing optimal overlapping between data transfer and data processing.

9. The software system of one of Claims 6 to 8, wherein the time reference structure locates the image strips with respect to the current image index in the sequence and with respect to the image strip position within the current image; and the data connections ensure repeated transfers of successive image strips together with synchronization information including the time reference structure and all modules repeatedly receive, process and transmit the image strips.

10. The software system of one of Claims 2 to 9, wherein the communication pattern comprises one the following types of connections between two ports:
a pine-line connection that is a point to point connection, which transfers consecutive image strips;
a [1/n]-scatter connection (SC) that is a point to point connection belonging to a group of n connections all issued from a common output port, which transfers one image strip every n image strips;
a [1/n]-gather connection (GA) that is a point to point connection belonging to a group of n connections all reaching a common input port, which transfers one image strip one every n image strip.

11. The software system of Claim 10, comprising data partitioning structures using pipeline connections and a propriety of the source module that is to convey two synchronous output streams as if they were emanating from two distinct parts of images, and gathering said two parts of images within the sink image processing function and push the final result towards a targeted terminal port.

12. A medical examination imaging apparatus having means for acquiring medical digital image data and using a software system having access to said medical digital image data according to one of the preceding Claims 1 to 11, and having display means for displaying the medical digital images and the processed medical digital images.

13. A computer program product comprising a set of instructions for running the software system as claimed in one of Claims 1 to 11.

## Revendications

1. Système logiciel, pour traiter une séquence d'images en déployant des fonctions de traitement d'images sur un système multiprocesseur appelé plateforme, ladite plateforme générant des données d'image d'entrée représentatives de la séquence d'images et fournissant en outre des données d'image de sortie traitées à partir des données d'image d'entrée générées, ledit système logiciel comprenant :
un modèle logiciel de subdivision de données, appelé schéma de communication, qui subdivise les images de la séquence en utilisant des paquets de données horodatés, dont le transfert peut chevaucher l'exécution desdites fonctions de traitement d'images.

2. Système logiciel suivant la revendication 1, dans lequel le schéma de communication comprend des modules logiciels (MOD1, MOD2) reliés par des liaisons orientées (PP) par des portes, et chaque module active une fonction de traitement d'images qui lui est attribuée et gère la synchronisation et les transferts de données.

3. Système logiciel suivant la revendication 2, dans lequel :
un module échange des informations avec un autre module par des portes ;
un module source (SOURCE) responsable de générer les paquets de données horodatés et une structure de données de référence temporelle, qui situe chaque paquet de données d'image d'une séquence d'images donnée ;
un ou plusieurs modules récepteurs (SINK) utilisés comme récepteurs de données de sortie, et
des modules ordinaires connectés entre le module source et les modules récepteurs de manière à ce que les données d'image circulent dans une direction seulement et de manière acyclique ;
et dans lequel le module source ne comporte pas de porte d'entrée et les modules récepteurs ne comportent pas de porte de sortie ; les modules ordinaires comportent des portes d'entrée et de sortie.

4. Système logiciel suivant la revendication 3, dans lequel, parmi les liaisons, il y a des liaisons de données se chargeant des données et spécialisées dans le transfert de paquets de données d'image, qui sont des liaisons unidirectionnelles.

5. Système logiciel suivant la revendication 4, dans lequel la structure de données de référence temporelle situe des paquets de données par rapport à un indice d'image dans la séquence d'images et par rapport à la position d'un paquet de données dans l'image en cours.

6. Système logiciel suivant la revendication 5, dans lequel le module source subdivise les données d'entrée en bandes d'image, une bande d'image étant un paquet de lignes d'image consécutives comprenant des données arrivant le long desdites lignes formées de pixels qui doivent être traités.

7. Système logiciel suivant la revendication 6, comprenant la définition de zones à chevauchement pour le traitement de pixels de bandes d'image spécifiques et les zones à chevauchement comprennent des parties supplémentaires de bandes d'image situées de chaque côté de ladite zone des bandes d'image spécifiques.

8. Système logiciel suivant la revendication 7 pour programmer une application répartie comprenant les étapes de transmission de bandes d'image avec des zones à chevauchement entre des modules émetteurs et des modules récepteurs, dans lequel sont présentes les étapes de réglage de la différence entre l'instant de production de bandes d'image par un module et l'instant d'émission des bandes d'image par ledit module, et les étapes de réglage de la différence entre l'instant de réception de bandes d'image par un module et l'instant de traitement des bandes d'image par ledit module pour exécuter un chevauchement optimal entre transfert de données et traitement de données.

9. Système logiciel suivant l'une quelconque des revendications 6 à 8, dans lequel la structure de référence temporelle situe les bandes d'image par rapport à l'indice d'image en cours dans la séquence et par rapport à la position de la bande d'image dans l'image en cours, et les liaisons de données veillent aux transferts répétés de bandes d'image successives ainsi que d'informations de synchronisation comprenant la structure de référence temporelle et tous les modules reçoivent, traitent et transmettent de manière répétée les bandes d'image.

10. Système logiciel suivant l'une quelconque des revendications 2 à 9, dans lequel le schéma de communication comprend un des types suivants de liaisons entre deux portes :
une liaison pipeline, c'est-à-dire une liaison point à point, qui transfère des bandes d'image consécutives ;
une liaison de diffusion [1/n] (SC), c'est-à-dire une liaison point à point se rapportant à un groupe de n liaisons provenant toutes d'une porte de sortie commune, qui transfère une bande d'image toutes les n bandes d'images ;
une liaison de regroupement [1/n] (GA), c'est-à-dire une liaison point à point se rapportant à un groupe de n liaisons atteignant toutes une porte d'entrée commune, qui transfère une bande d'image toutes les n bandes d'images.

11. Système logiciel suivant la revendication 10, comprenant des structures à subdivision des données en utilisant des liaisons pipeline et une propriété du module source qui est d'acheminer deux flux de sortie synchrones comme s'ils provenaient de deux parties distinctes d'image, et en regroupant lesdites deux parties d'image dans la fonction de traitement d'image du récepteur et en poussant le résultat final vers une porte de terminal cible.

12. Appareil d'imagerie pour examen médical comprenant des moyens pour acquérir des données d'image numériques médicales et utilisant un système logiciel ayant accès auxdites données d'image numériques médicales suivant l'une quelconque des revendications 1 à 11, et comprenant des moyens d'affichage pour afficher les images numériques médicales et les images numériques médicales traitées.

13. Produit formant programme informatique comprenant un jeu d'instructions pour exécuter le système logiciel suivant l'une quelconque des revendications 1 à 11.

## Patentansprüche

1. Softwaresystem für die Verarbeitung einer Bildsequenz zum Verteilen von Bildverarbeitungsfunktionen auf einem Multiprozessorsystem mit der Bezeichnung Plattform, wobei die besagte Plattform Eingabebilddaten generiert, repräsentativ für die Bildsequenz, und außerdem verarbeitete Ausgabebilddaten von den generierten Eingabebilddaten bereitstellt, wobei das besagte Softwaresystem enthält:
Ein Modell zur Partitionierung von Softwaredaten, bezeichnet als Kommunikationsmuster, das die Bilder der Sequenz unter Verwendung von zeitmarkierten Datenpaketen partitioniert, deren Übertragung die Ausführung der besagten Bildverarbeitungsfunktionen überlappen kann.

2. Softwaresystem nach Anspruch 1, worin das Kommunikationsmuster Softwaremodule (MOD1, MOD2) enthält, das über Ports mit ausgerichteten Anschlüssen (PP) verbunden ist; und jedes Modul aktiviert eine ihr angegliederte Bildverarbeitungsfunktion und bewerkstelligt Übertragungen und die Synchronisierung der Daten.

3. Softwaresystem nach Anspruch 2, mit:
Einem Modul für den Austausch von Information mit einem anderen Modul über Ports;
einem Sourcemodul (SOURCE), zuständige für die Generierung von zeitmarkierten Datenpaketen und einer Zeitreferenz-Datenstruktur, die jedes Bilddatenpaket einer bestimmten Bildsequenz lokalisiert;
einem oder mehreren Sinkmodulen (SINK), verwendet als Empfänger von Ausgabedaten; und
gewöhnlichen Modulen, angeschlossen zwischen dem Sourcemodul und den Sinkmodulen auf eine Weise, dass die Bilddaten nur in eine Richtung und auf azyklische und Weise fließen;
und worin das Sourcemodul keinen Eingabeport und die Sinkmodule keine Ausgabeports hat; Die gewöhnlichen Module haben Eingabe- und Ausgabeports.

4. Softwaresystem nach Anspruch 3, worin es unter den Anschlüssen Datenanschlüsse gibt, die Daten handhaben und auf die Übertragung von Bilddatenpaketen spezialisiert und Einweg-Anschlüsse sind.

5. Softwaresystem nach Anspruch 4, worin die Zeitreferenz-Datenstruktur Datenpakete in Bezug auf einen Bildindex in der Bildsequenz und in Bezug auf eine Datenpaketposition innerhalb des laufenden Bilds lokalisiert.

6. Softwaresystem nach Anspruch 5, in dem das Sourcemodul die Eingabedaten in Bildstreifen partitioniert, wobei ein Bildstreifen ein Paket konsekutiver Bildzeilen wird und Daten enthält, die entlang den besagte Zeilen kommen, geformt aus Pixeln, die verarbeitet werden müssen.

7. Softwaresystem nach Anspruch 6 mit der Definition der Überlappungsbereiche für die Verarbeitung der Pixel der spezifischen Bildstreifen, wobei die Überlappungsbereiche zusätzliche Teile der Bildstreifen enthalten, die an jeder Seiten des besagten Bereichs der spezifischen Bildstreifen befindlich sind.

8. Softwaresystem nach Anspruch 7 für die Programmierung einer verteilten Anwendung mit Schritten für die Übertragung von Bildstreifen mit Überlappungsbereichen zwischen sendenden Modulen und empfangenden Modulen, wobei Schritte vorhanden sind zur Anpassung der Differenz zwischen dem Zeitpunkt der Erzeugung eines Bildstreifens von einem Modul und dem Zeitpunkt des Sendens der Bildstreifen von dem besagten Modul und Schritte zur Anpassung der Differenz zwischen dem Zeitpunkt des Empfangens der Bildstreifen von einem Modul und dem Zeitpunkt der Verarbeitung der Bildstreifen von dem besagten Modul für die Ausführung einer optimalen Überlappung zwischen der Datenübertragung und der Datenverarbeitung.

9. Softwaresystem nach einem der Ansprüche 6 bis 8, worin die Zeitreferenzstruktur die Bildstreifen in Bezug auf den laufenden Bildindex in der Sequenz und in Bezug auf die Bildstreifenposition innerhalb des laufenden Bilds lokalisiert; und die Datenanschlüsse wiederholt Übertragungen von aufeinanderfolgenden Bildstreifen zusammen mit Synchronisierungsinformation einschließlich der Zeitreferenzstruktur versichern und alle Module die Bildstreifen wiederholt erhalten, verarbeiten und übertragen.

10. Softwaresystem nach einem der Ansprüche 2 to 9, worin das Kommunikationsmuster einen der folgende Typen von Anschlüssen zwischen zwei Ports enthält:
Einen Fließbandanschluss, also einen Point-to-Point-Anschluss, der konsekutiv Bildstreifen überträgt;
einen [1/n]-Zerstreuungsanschluss (SC), also einen Point-to-Point-Anschluss, der zu einer Gruppe von n Anschlüssen gehört, die alle aus einem gemeinsamen Ausgabeport kommen, der einen Bildstreifen alle n Bildstreifen überträgt;
einen [1/n]-Sammlungsanschluss, (GA) also einen Point-to-Point-Anschluss, der zu einer Gruppe von n Anschlüssen gehört, die alle einen gemeinsamen Eingabeport anlaufen, der einen Bildstreifen alle n Bildstreifen überträgt.

11. Softwaresystem nach Anspruch 10 mit Datenpartitionierungsstrukturen, die Fließbandanschlüsse verwenden, und einer Vorschrift für das Sourcemodul, zwei synchrone Ausgabeströme zu befördern, als würden sie von zwei gesonderten Bildteilen ausgehen, und die besagten zwei Bildteile innerhalb der Sink-Bildverarbeitungsfunktion zu sammeln und das Endergebnis an einen angezielten Terminalport zu verschieben.

12. Eine medizinische Bilduntersuchungsvorrichtung mit Mitteln für die Aufnahme medizinischer digitaler Bilddaten und die Verwendung eines Softwaresystems mit einem Zugang zu den besagten medizinischen digitalen Bilddaten gemäß einem der vorhergehenden Ansprüche 1 bis 11, und mit Anzeigemitteln für die Anzeige der medizinischen digitalen Bilder und der verarbeiteten medizinischen digitalen Bilder versehen.

13. Computerprogrammprodukt mit einem Satz an Instruktionen für den Betrieb des Softwaresystems gemäß einem der Ansprüche 1 bis 11.
